(19) Europäisches Patentamt
European Patent Office
Office européen des brevets

(11) Veröffentlichungsnummer: **0 050 792**
**B1**

# (12) EUROPÄISCHE PATENTSCHRIFT

(45) Veröffentlichungstag der Patentschrift: **01.02.84**

(51) Int. Cl.$^3$: **C 07 F 9/38**

(21) Anmeldenummer: **81108296.5**

(22) Anmeldetag: **14.10.81**

(54) **Verfahren zur Herstellung von Phosphonohydroxyacetonitril.**

(30) Priorität: **23.10.80 DE 3039997**

(43) Veröffentlichungstag der Anmeldung: **05.05.82 Patentblatt 82/18**

(45) Bekanntmachung des Hinweises auf die Patenterteilung: **01.02.84 Patentblatt 84/5**

(84) Benannte Vertragsstaaten: **AT BE CH DE FR GB IT LI NL SE**

(56) Entgegenhaltungen:
**EP - A - 0 027 199**

**Houben-Weyl, Methoden der organischen Chemie, Sauerstoffverlag III, 1952, S275; Monatshefte 1950, Bd. 81, S. 845**

(73) Patentinhaber: **BAYER AG, Zentralbereich Patente, Marken und Lizenzen, D-5090 Leverkusen 1, Bayerwerk (DE)**

(72) Erfinder: **Oediger, Hermann, Dr., Roggendorfstrasse 51, D-5000 Köln 80 (DE)**
Erfinder: **Lieb, Folker, Dr., Alfred-Kubin-Strasse 1, D-5090 Leverkusen (DE)**
Erfinder: **Disselnkötter, Hans, Dr., Gerstenkamp 17, D-5000 Köln 80 (DE)**

EP 0 050 792 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von Phosphonohydroxyacetonitril

Die Erfindung betrifft ein Verfahren zur Herstellung von Phosphonohydroxyacetonitril sowie seine Verwendung als Zwischenprodukt für die Herstellung von Arzneimitteln, insbesondere für die Herstellung eines antiviralen Mittels in der Human- und Tiermedizin.

Das neue Phosphonohydroxyacetonitril der Formel (I)

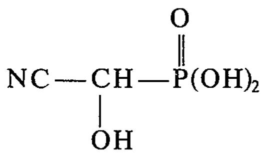

(I)

entsteht, wenn man Phosphonoformaldehyd-Hydrat der Formel (II)

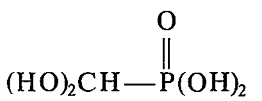

(II)

in Form seiner Salze mit Cyanwasserstoffsäure umsetzt und das Reaktionsprodukt gegebenenfalls ansäuert.

Das erfindungsgemäß erhaltene Phosphonohydroxyacetonitril kann in Salze übergeführt werden.

Phosphonoformaldehydhydrat ist noch nicht bekannt. Er kann hergestellt werden, indem man Dialkoxymethanphosphonsäuren [Bull. Chem. Soc. Japan 51 (1978), 2169] mit Wasser erwärmt und gegebenenfalls mit einer Base umsetzt.

Als Ausgangsstoffe für das erfindungsgemäße Verfahren eignen sich anorganische oder organische Salze des Phosphonoformaldehydhydrats, beispielsweise anorganische Salze, wie z. B. das Natriumsalz, aber auch organische Salze, wie z. B. das Triethylammoniumsalz.

Als Cyanwasserstoffsäure eignen sich wasserfreie Cyanwasserstoffsäure oder konzentrierte wäßrige Lösungen von Cyanwasserstoffsäure.

Als Verdünnungsmittel für die erfindungsgemäße Reaktion kommt Wasser in Frage. Man kann aber auch bei Verwendung von in Cyanwasserstoffsäure löslichen Salzen ohne zusätzliches Verdünnungsmittel arbeiten.

Das erfindungsgemäße Verfahren wird in einem Temperaturbereich von 0°C bis +40°C, vorzugsweise zwischen +15°C und +30°C, durchgeführt.

Im allgemeinen setzt man 1 Mol der Verbindung (II) mit 1 bis 20 Mol, vorzugsweise mit 1,2 bis 5 Mol Cyanwasserstoffsäure, um. Ein größerer Überschuß an Cyanwasserstoffsäure schadet nicht, wenn beispielsweise in wasserfreier Cyanwasserstoffsäure als Verdünnungsmittel gearbeitet wird.

Die Reaktionsdauer ist von der Temperatur abhängig und liegt zwischen 15 Minuten und 3 Stunden.

Die erhaltene Verbindung (I) kann durch Eindampfen der Lösung und gegebenenfalls sich anschließende Entsalzung an einem saueren Ionenaustauscher isoliert werden.

Beispielsweise kann das Phosphonohydroxyacetonitril durch Verseifen der Nitrilgruppe mit Salzsäure, in die Phosphonohydroxyessigsäure überführt werden.

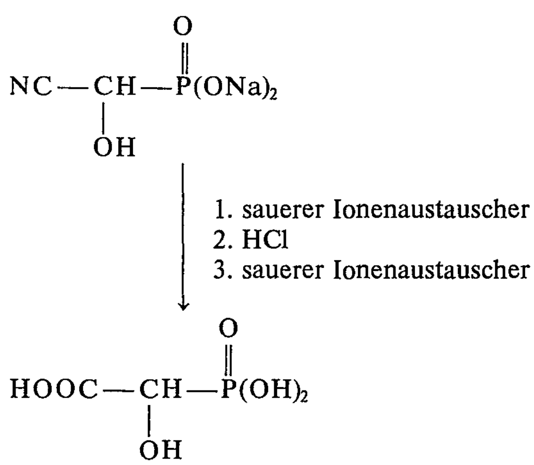


(III)

(IV)

Die Phosphonohydroxyessigsäure wirkt gegen Herpes-Viren bei Mensch und Tier, insbesondere gegen Herpes simplex-Viren vom Typ I und II.

## Beispiel

Phosphonohydroxyacetonitril, $Na_2$-Salz

15 g (0,083 Mol) Phosphonoformaldehyd, $Na_2$-Salz · 2 $H_2O$, werden in 30 ml $H_2O$ suspendiert und anschließend bei etwa + 25°C mit 10 ml wasserfreier Cyanwasserstoffsäure versetzt. Die Temperatur steigt auf + 30°C; es entsteht eine klare Lösung. Man hält die Mischung noch 1 Stunde bei + 30°C, entfernt anschließend die überschüssige Cyanwasserstoffsäure und das Wasser im Vakuum und trocknet den Rückstand im Vakuum. Man erhält auf diese Weise 15 g (95%der Theorie) Phosphonohydroxyacetonitril, $Na_2$-Salz (Dihydrat).

$^1$H-NMR: $\delta$ = 4,5 (1 H, d, J = 16,0 Hz) ppm
($D_2O$)
$^{13}$C-NMR: $\delta$ = 122,3 (C ≡ N); 60,2 (d, $J_{C,P}$ = 133,3 Hz) ppm
($D_2O$)

Das so erhaltene Phosphonohydroxyacetonitril kann auf folgende Weise in die Phosphonohydroxyessigsäure überführt werden:

9,5 g (0,05 Mol) Phosphonohydroxyacetonitril, $Na_2$-Salz, (Dihydrat), werden an einem saueren Ionenaustauscher in Phosphonohydroxyacetonitril übergeführt, in 30 ml konz. Salzsäure gelöst und über Nacht stehen gelassen. Man erwärmt noch 4 Stunden auf 85—90°C, entfernt das Lösungsmittel im Vakuum, nimmt den Abdampfrückstand in Wasser auf und filtriert die Lösung über einen saueren Ionenaustauscher. Man dampft das Filtrat im Vakuum ein, stellt die mit Wasser verdünnte Lösung auf einen pH-Wert von etwa 7,5 und entfernt das Wasser im Vakuum. Man erhält auf diese Weise 8,3 g (75%der Theorie) Phosphonohydroxyessigsäure, $Na_3$-Salz.

$^1$H-NMR: $\delta$ = 4,1 (1 H, d, J = 18 Hz) ppm
($D_2O$)
$^{13}$C-NMR: $\delta$ = 168,1 ($COO^{\ominus}$); 73,7 (d, $J_{C,P}$ = 134,1 Hz) ppm
($D_2O$)

Man kann auch wahlweise das eingedampfte Filtrat mit Ethylacetat verreiben und die so gewonnene feste Phosphonohydroxyessigsäure durch Absaugen und Trocknen gewinnen.

Ausbeute 5,1 g (70% der Theorie), Fp 153—154°C
$^1$H-NMR: $\delta$ = 4,7 (1 H, d, J = 18 Hz) ppm
($D_2O$)

## Patentanspruch

Verfahren zur Herstellung von Phosphonohydroxyacetonitril der Formel (I)

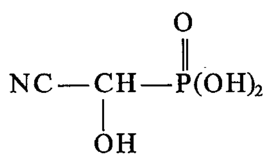

(I)

oder seiner Salze, dadurch gekennzeichnet, daß man Phosphonoformaldehyd-Hydrat der Formel (II)

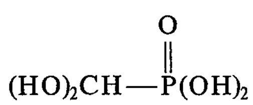

in Form seiner Salze mit Cyanwasserstoffsäure umsetzt und das Reaktionsprodukt gegebenenfalls ansäuert.

## Claim

Process for the preparation of phosphonohydroxyacetonitrile of the formula (I)

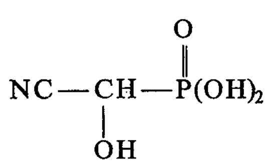

(I)

or its salts, characterised in that phosphonoformaldehyde hydrate of the formula (II)

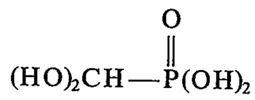

is reacted in the form of its salts with hydrocyanic acid and the reaction product is, if desired, acidified.

**Revendication**

Procédé de préparation du phosphonohydroxyacétronitrile de formule (I)

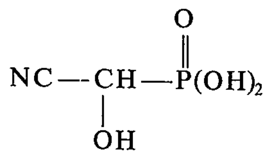

(I)

ou de sels, caractérisé en ce que l'on fait réagir l'hydrate du phosphonoformaldéhyde de formule (II)

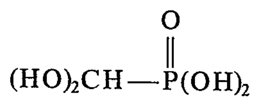

à l'état de sel, avec l'acide cyanhydrique, et on acidifie le cas échéant le produit de réaction.